# FASCICULE DE BREVET EUROPEEN

(11) **EP 0 607 083 B1**
(45) Date de publication et mention de la délivrance du brevet: **09.10.1996**
(21) Numéro de dépôt: 94400068.6
(22) Date de dépôt: 12.01.1994
(51) Int. Cl.: H02G 3/04

(54) **Accessoire de goulotte et goulotte équipée d'un tel accessoire**
Kabelrinnezusatz und Rinne ausgerustet mit einem solchem Zusatz
Cable ducting accessory and associated ducting

(30) Priorité: 14.01.1993 FR 9300288
(43) Date de publication de la demande: 20.07.1994
(73) Titulaire: LEGRAND, 87045 Limoges (FR)
(72) Inventeur: Buard, Yvon, F-53600 Voutre (FR)
(74) Mandataire: CABINET BONNET-THIRION

(56) Documents cités:
- DE-A- 2 109 614
- FR-A- 2 383 539
- US-A- 4 905 433

## Description

La présente invention concerne d'une manière générale les goulottes du type de celles mises en oeuvre pour le logement et la protection de certains appareillages électriques et des conducteurs nécessaires à la desserte de ceux-ci.

Globalement, une telle goulotte comporte, sous la forme générale d'au moins un profilé, et, le plus souvent, de deux, un corps et un couvercle.

Réalisées par extrusion, les goulottes de ce type sont usuellement de couleur uniforme.

Pour en modifier l'esthétique, un apport de couleur peut être souhaitable.

Diverses dispositions sont envisageables à cet effet.

Certaines relèvent du fabricant.

Par exemple, le couvercle et/ou le corps peuvent être teintés dans la masse, suivant des couleurs différentes.

En variante, une ou plusieurs bandes de couleurs peuvent être rapportées à la peinture sur un tel couvercle et/ou sur un tel corps.

Dans l'un et l'autre cas, la disposition retenue a pour inconvénient de conduire à une multiplication dispendieuse des références ou d'imposer de ne réaliser les fabrications que sur commande.

Le choix de la ou des couleurs retenues étant quasi irréversible, elles manquent en outre de flexibilité, ce choix devant en pratique intervenir très tôt dans le calendrier d'un chantier, sans permettre de pouvoir suivre ensuite l'éventuelle évolution de l'utilisateur à ce sujet.

D'autres dispositions relèvent de l'utilisateur.

Par exemple, il est possible à l'utilisateur de poser sur le couvercle et/ou sur le corps une ou plusieurs bandes adhésives colorées.

Mais, outre que, par le bon contrôle de positionnement qu'elle implique, cette pose est délicate, la ou les bandes adhésives ainsi posées sont relativement fragiles dans la mesure où, au moins localement, elles peuvent être sujettes à des décollements intempestifs tout en étant malaisées à déposer dans leur totalité si leur retrait est souhaité.

La présente invention a d'une manière générale pour objet une disposition qui, tout en permettant d'assurer à la demande un apport de couleur à une goulotte si désiré, ne présente pas les inconvénients précédents et conduit en outre à d'autres avantages.

De manière plus précise, elle a tout d'abord pour objet un accessoire de goulotte caractérisé en ce qu'il comporte, en pratique d'un seul tenant, d'une part, une lame, pour son assujettissement à la goulotte à équiper, et, d'autre part, un bourrelet, pour faire saillie sur celle-ci ; elle a encore pour objet toute goulotte équipée, au moins localement, sur une partie au moins de sa longueur, d'au moins un tel accessoire.

En pratique, l'accessoire de goulotte suivant l'invention est inséré par sa lame dans l'interstice existant quasi inévitablement entre le corps et le couvercle d'une goulotte.

Quoi qu'il en soit, constituant initialement une pièce distincte, l'accessoire de goulotte suivant l'invention est susceptible d'être réalisé dans une quelconque couleur, et, avec un minimum de références, il permet donc un grand nombre de combinaisons de couleurs entre lui et les goulottes qu'il est susceptible d'équiper.

En variante, ou en complément, le bourrelet qu'il comporte, et qui en est normalement la seule partie apparente, est avantageusement susceptible de se présenter sous diverses configurations, ce qui différencie ces combinaisons, et, donc, en accroît encore le nombre.

Dans tous les cas, l'accessoire de goulotte suivant l'invention convient avantageusement à divers types de goulotte.

Il est en outre avantageusement démontable, ce qui, avec une grande souplesse, permet si désiré de le changer par un autre, au gré des souhaits ou des nécessités.

Du fait de cette démontabilité, il peut en outre être aisément récupéré en fin de vie, pour être recyclé.

Par ailleurs, outre sa participation au décor de la goulotte qui l'équipe, l'accessoire de goulotte suivant l'invention est avantageusement susceptible d'en améliorer l'aspect, dans le cas où l'interstice existant entre son corps et son couvercle est relativement important.

En effet, en saillie sur l'ensemble, le bourrelet de cet accessoire de goulotte recouvre alors avantageusement au moins partiellement cet interstice, en le dissimulant ainsi à la vue, et en rétablissant ainsi toute la continuité souhaitable entre le corps et le couvercle.

Conjointement, par sa lame et /ou son bourrelet, il constitue avantageusement un joint d'étanchéité pour l'ensemble, au bénéfice de la protection recherchée pour les appareillages électriques concernés.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'une goulotte équipée d'accessoires de goulotte suivant l'invention ;
la figure 2 est, à l'échelle de la figure 1, et à la manière de celle-ci, une vue en perspective d'un tel accessoire de goulotte, représenté isolément ;
la figure 3 est, à échelle supérieure, une vue en coupe transversale de cet accessoire de goulotte, suivant la ligne III-III de la figure 2 ;
les figures 4A, 4B sont, à échelle différente, des vues partielles en coupe transversale illustrant deux phases successives d'un premier mode de mise en place possible pour l'accessoire de goulotte suivant l'invention, la figure 4B reprenant, à échelle supérieure, le détail de la figure 1 repéré par un encart IV sur cette figure 1 ;
les figures 5A, 5B, et il en est de même pour les figures 6A, 6B, sont des vues partielles en coupe transversale qui, analogues à celles des figures 4A, 4B, se rapportent à d'autres modes de mise en place possibles pour l'accessoire de goulotte suivant l'invention ;
les figures 7, 8, 9, 10, 11 sont des vues en coupe transversale qui, analogues à celle de la figure 3, mais à échelle inférieure, se rapportent à des variantes de réalisation de l'accessoire de goulotte suivant l'invention ;
la figure 12 est une vue partielle en coupe transversale, qui, analogue à celle des figures 4B, 5B et 6B, se rapporte à un autre type de goulotte ;
la figure 13 est une vue partielle en coupe transversale, qui, analogue elle aussi à celle des figures 4B, 5B et 6B, se rapporte également à un autre type de goulotte.

Tel qu'illustré sur ces figures, une goulotte 10 à laquelle est susceptible de s'appliquer l'invention comporte, de manière connue en soi, sous la forme générale d'au moins un profilé, un corps 11 et un couvercle 12.

Dans les formes de réalisation représentées, le corps 11 et le couvercle 12 forment deux profilés distincts.

Outre une paroi de fond non visible sur la figure, le corps 11 comporte deux parois latérales 13, qui, dans la forme de réalisation représentée, sont globalement parallèles l'une à l'autre, et qui, le long de leur bord libre, présentent chacune, en direction de l'autre, un retour 14 dont l'extrémité libre est conformée en U et forme ainsi une gorge 15 à concavité orientée en direction opposée à la paroi de fond.

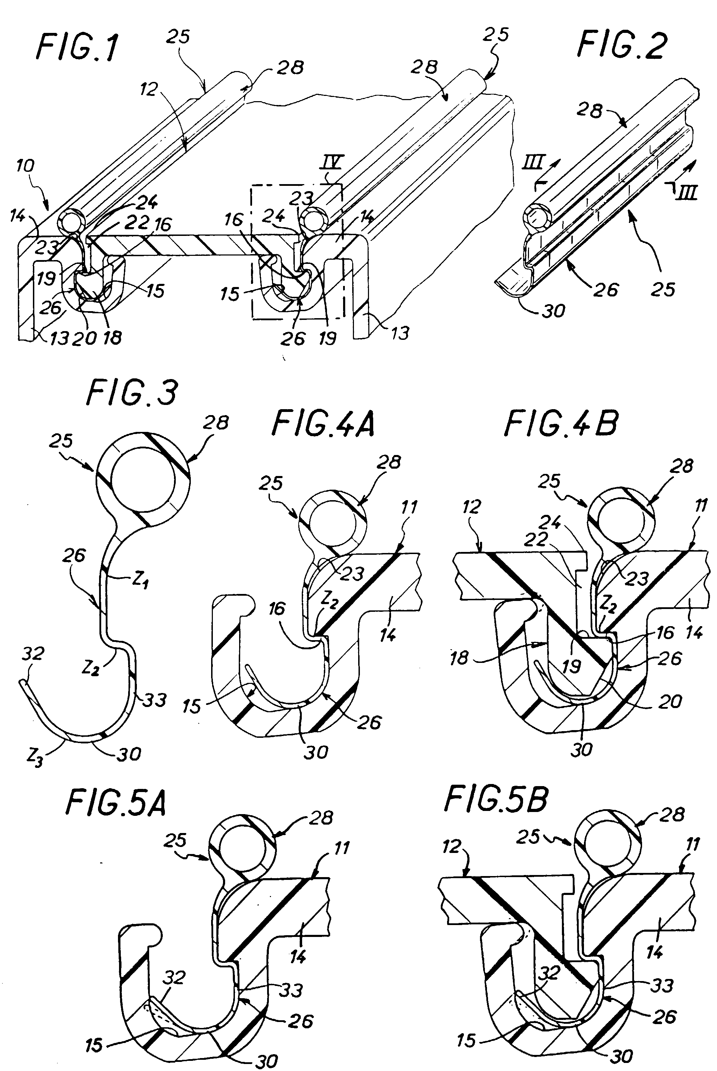

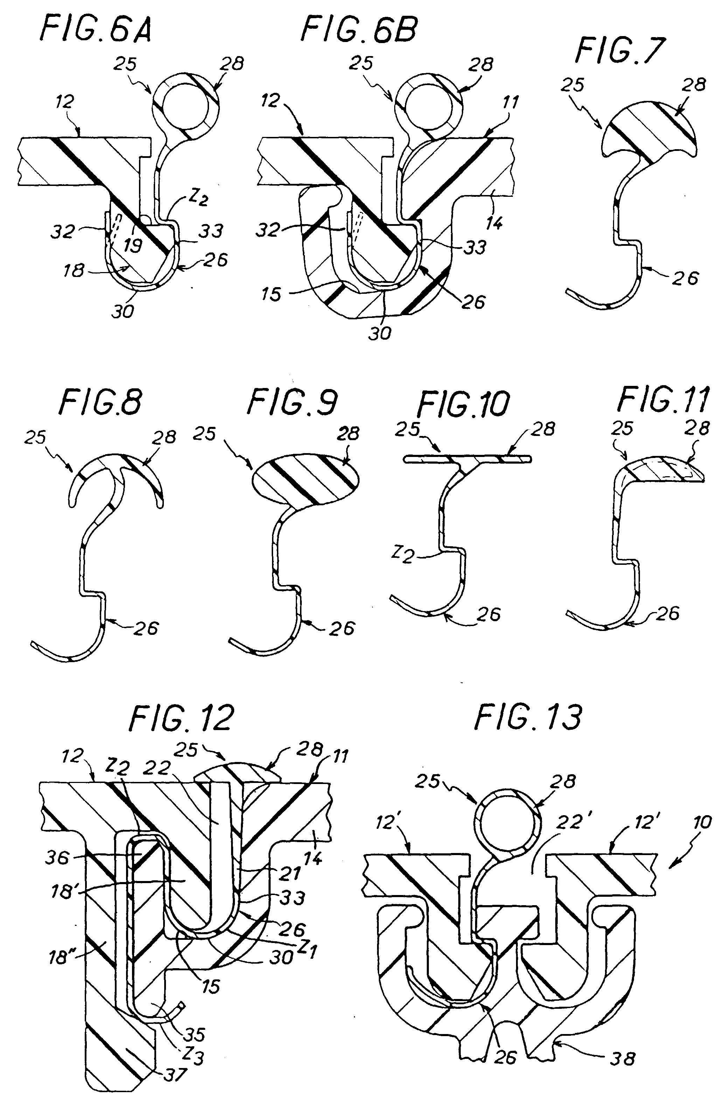

Les figures 1 à 11, et il en est de même de la figure 13, concernent plus particulièrement, à titre d'exemple, le cas où l'assujettissement du couvercle 12 au corps 11 se fait par encliquetage dans cette gorge 15.

Tel que représenté, un cran 16 est alors prévu transversalement à cet effet dans celle-ci.

Par exemple, et tel que représenté, ce cran 16 affecte celui des flancs de la gorge 15 qui est le plus proche de la paroi latérale 13 correspondante.

Corollairement, le couvercle 12 présente, dans ce cas, en saillie sur sa surface inférieure, le long de chacun de ses bords libres, pour son encliquetage dans la gorge 15 correspondante du corps 11, un cordon 18.

En correspondance avec le cran 16 de la gorge 15, et pour coopération avec celui-ci, ce cordon 18 présente lui-même transversalement, du côté orienté vers la paroi latérale 13 correspondante du corps 11, un cran 19, et, de ce même côté, son bord d'attaque est biseauté par un chanfrein 20 pour en faciliter l'engagement dans la gorge 15.

Ainsi qu'on le notera, il existe inévitablement un interstice 22 entre le corps 11 et le couvercle 12 le long de chacun des cordons 18 de ce dernier.

Cet interstice 22 est en pratique d'autant plus important que, pour faciliter l'engagement du cordon 18 du couvercle 12 dans la gorge 15 du corps 11, l'arête du retour 14 formant une telle gorge 15 est adoucie par un large arrondi 23.

Pour combler, au moins partiellement, un tel interstice 22, le couvercle 12 présente, latéralement, en porte-à-faux, au-delà de chacun de ses cordons 18, un prolongement 24 de moindre épaisseur.

Les dispositions qui précèdent sont bien connues par elles-mêmes, et ne relevant pas, en propre, de la présente invention, elles ne seront pas décrites plus en détail ici.

Suivant l'invention, la goulotte 10 est équipée, au moins localement, sur une partie au moins de sa longueur, d'au moins un accessoire de goulotte 25 du type de celui qui sera maintenant décrit en référence aux figures 1 à 3.

Comme le corps 11 et le couvercle 12 de la goulotte 10, cet accessoire de goulotte 25 se présente sous la forme générale d'un profilé.

Dans les formes de réalisation représentées, sa section transversale est globalement en forme de virgule.

Il comporte, en pratique d'un seul tenant, d'une part, une lame 26, pour son assujettissement à la goulotte 10 à équiper, et, d'autre part, un bourrelet 28, pour faire saillie sur cette goulotte 10.

Dans les formes de réalisation représentées, l'accessoire de goulotte 25 est destiné à être inséré par sa lame 26 dans un interstice 22 de la goulotte 10, pour assujettissement par pincement entre le corps 11 et le couvercle 12 de celle-ci.

Sa lame 26 est donc relativement mince.

Dans les formes de réalisation représentées, et exception faite de son raccordement au bourrelet 28, où elle est épaissie, en allant en s'élargissant progressivement en direction de ce bourrelet 28, cette lame 26 est équi-épaisse.

Autrement dit, elle a, dans ces formes de réalisation, une même épaisseur en chacun de ses points dans sa partie courante.

Pour le contournement au moins partiel d'un cordon 18 du couvercle 12, la lame 26 forme globalement un U 30.

En pratique, dans les formes de réalisation représentées correspondant au cas en cause, cette lame 26 présente trois zones, à savoir, figure 3, une première zone Z1, par laquelle elle se raccorde au bourrelet 28 dont elle est issue, une deuxième zone Z2, qui, sensiblement perpendiculaire à la précédente, forme un décrochement pour l'ensemble, et une troisième zone Z3 qui forme le U 30 terminal.

Dans les formes de réalisation représentées, la première zone Z1 se raccorde en oblique au bourrelet 28, au profil d'un arrondi 23 du corps 11 de la goulotte 10, et la deuxième zone Z2 s'étend du même côté de la zone Z1 que celui vers lequel s'infléchit ainsi en oblique cette dernière.

En outre, dans ces formes de réalisation, la troisième zone Z3 s'étend sensiblement perpendiculairement à la deuxième zone Z2 à son raccordement à celle-ci.

Dans les formes de réalisation plus particulièrement représentées sur les figures 1 à 9, le bourrelet 28 de l'accessoire de goulotte 25 suivant l'invention s'étend transversalement de part et d'autre de la lame 26 à son raccordement à celle-ci.

Par exemple, figures 1 à 3, ce bourrelet 28 est cylindrique et creux, et, en section transversale, il a un contour circulaire.

Pour la mise en place, sur une goulotte 10, d'un tel accessoire de goulotte 25, il peut par exemple être procédé comme suit.

Dans un premier temps, figure 4A, cet accessoire de goulotte 25 est engagé par le U 30 de sa lame 26 dans une gorge 15 du corps 11, avec la deuxième zone Z2, en décrochement, de sa lame 26 qui vient se prendre sous le cran 16 de cette gorge 15.

L'accessoire de goulotte 25 se trouve alors maintenu de manière stable sur le corps 11, par compression élastique du U 30 de sa lame 26 entre le cran 16 de la gorge 15 et le fond de celle-ci, ce qui permet avantageusement toute manipulation désirée de l'ensemble sans qu'il échappe à ce corps 11.

Par ailleurs, compte tenu de ce qui précède, et compte tenu de ce que, corollairement, les dispositions dimensionnelles en cause ont été dûment établies en conséquence, la première zone Z1 de la lame 26 de l'accessoire de goulotte 25 suit alors au plus près l'arrondi 23 du corps 11, cependant que son bourrelet 28 fait saillie sur le retour 14 correspondant de celui-ci, en léger déport en direction de ce retour 14.

Dans un deuxième temps, figure 4B, et s'agissant d'une goulotte 10 du genre en cause, le couvercle 12 est encliqueté dans la gorge 15 du corps 11 par son cordon 18, suivant un processus habituel en la matière.

Ainsi qu'il est aisé de le comprendre, du fait de son léger déport, et du fait également qu'il est capable d'une certaine déformation élastique, le bourrelet 28 de l'accessoire de goulotte 25 ne gêne pas l'encliquetage correspondant.

Quoi qu'il en soit, au terme de cet encliquetage, cet accessoire de goulotte 25 se trouve pincé par la zone Z2 de sa lame 26 entre le cran 16 du corps 11 et le cran 19 du couvercle 12, ce qui en affermit le maintien par rapport à l'ensemble.

Conjointement, son bourrelet 28 recouvre au moins partiellement l'interstice 22 correspondant de la goulotte 10.

Tel que représenté sur la figure 1, la goulotte 10 peut ainsi être équipée, sur toute sa longueur, de manière continue ou par tronçons, d'un accessoire de goulotte 25 dans chacun de ses interstices 22.

Dans la variante de réalisation représentée sur les figures 5A et 5B, l'aile libre 32, au moins, du U 30 que forme la lame 26 de l'accessoire de goulotte 25 suivant l'invention est élastiquement déformable, et il est tiré profit de son élasticité pour affermir le maintien initial de cet accessoire de goulotte 25 dans la gorge 15 du corps 11.

Pour ce faire, cette aile libre 32 s'écarte en oblique de l'autre aile 33 du U 30.

Ainsi, elle porte élastiquement sur le flanc correspondant de la gorge 15, tel que représenté en trait continu sur la figure 5A, sur laquelle, par ailleurs, sa configuration au repos est conjointement représentée en traits interrompus.

Pour le reste, les dispositions sont les mêmes que les précédentes.

Dans la variante de réalisation représentée sur les figures 6A et 6B, l'aile libre 32 du U 30 que forme la lame 26 de l'accessoire de goulotte 25 suivant l'invention se rapproche au contraire en oblique de l'autre aile 33 de ce U 30, et l'accessoire de goulotte 25 est initialement mis en place sur le cordon 18 du couvercle 12 avant l'encliquetage de celui-ci dans la gorge 15 du corps 11, figure 6A.

Son maintien sur le couvercle 12 se trouve dès lors élastiquement assuré par appui de la deuxième zone Z2 de sa lame 26 contre le cran 19 du cordon 18 et sollicitation élastique de l'aile libre 32 du U 30 de cette lame 26 dans le sens conduisant cette deuxième zone Z2 à demeurer ainsi en prise avec ce cran 19.

Dans les variantes de réalisation représentées sur les figures 7 et 8, le bourrelet 28 de l'accessoire de goulotte 25 suivant l'invention a en section transversale une forme de calotte, soit massive, figure 7, soit évidée, figure 8.

Dans la variante de réalisation représentée sur la figure 9, il a, en section transversale, une forme ovoïde, et, dans la variante de réalisation représentée sur la figure 10, il a, en section transversale, une forme plate.

Bien entendu, ces variantes de réalisation ne sont données ici qu'à titre d'exemple, pour illustrer la grande diversité de forme que peut ainsi présenter le bourrelet 28 de l'accessoire de goulotte 25 suivant l'invention.

De nombreuses autres variantes de réalisation sont d'ailleurs envisageables.

Par exemple, au lieu d'être lisse, le bourrelet 28 de cet accessoire de goulotte 25 pourrait tout aussi bien comporter des stries.

En outre, et tel que représenté sur la figure 11, le bourrelet 28 peut tout aussi bien ne s'étendre transversalement que d'un seul côté de la lame 26 qui le porte.

Dans la forme de réalisation représentée, il s'étend du même côté de cette lame 26 que la zone Z2 de celle-ci formant décrochement.

Par ailleurs, dans cette forme de réalisation, il s'agit d'un bourrelet 28 en forme de calotte, soit massive, tel que représenté en trait continu, soit creuse, avec un repli le long de son bord libre, tel que schématisé en traits interrompus.

Mais, les formes tubulaire, ovoïde, plate, des figures 1 à 6, 9 et 10 précédentes, peuvent tout aussi bien être mises en oeuvre dans le cas d'une telle extension transversale unilatérale du bourrelet 28.

La figure 12 concerne, à titre d'un autre exemple, le cas où l'assujettissement du couvercle 12 au corps 11 se fait par encliquetage sur le retour 14 formant la gorge 15, et non plus dans celle-ci.

Le couvercle 12 présente, dans ce cas, en saillie sur sa surface inférieure, d'une part, un cordon 18' dépourvu de tout cran, pour son engagement dans la gorge 15, et, d'autre part, parallèlement à ce cordon 18', et en retrait par rapport à celui-ci, un contre-cordon 18", qui, pour son encliquetage sur un talon 35 prolongeant vers l'intérieur l'aile libre 36 de la partie du corps 11 définissant cette gorge 15 sur son retour 14, présente, en correspondance, en saillie, un cran 37.

La lame 26 de l'accessoire de goulotte 25 suivant l'invention est conformée en conséquence.

Dans la forme de réalisation représentée, elle présente, successivement, à compter du bourrelet 28, une première zone Z1, conformée en U, pour le contournement du cordon 18' du couvercle 12, une deuxième zone Z2, également conformée en U, mais de sens inverse de la précédente, pour le contournement de l'aile libre 36 du corps 11, et une troisième zone Z3, également conformée en U, suivant le même sens que la première zone Z1, pour son engagement sur le talon 35.

Comme précédemment, l'accessoire de goulotte 25 suivant l'invention est inséré par sa lame 26, et, plus précisément, par la portion de celle-ci immédiatement attenante à son bourrelet 28, dans l'interstice 22 existant entre le corps 11 et le couvercle 12 de la goulotte 10 à équiper.

La figure 13 illustre l'application de l'invention au cas où, le corps 11 de la goulotte 10 à équiper comportant, intérieurement, entre ses parois latérales, une cloison intermédiaire 38, il est prévu, au lieu et place d'un couvercle 12 unique, deux couvercles 12', de largeur moindre, et disposés côte à côte, à un même niveau que le précédent, avec, entre ces couvercles 12', un interstice 22'.

Comme précédemment, le bourrelet 28 de l'accessoire de goulotte 25 suivant l'invention recouvre alors au moins partiellement cet interstice 22'.

Dans la forme de réalisation représentée, la goulotte 10 est du type de celle représentée sur les figures 1 à 11.

Mais, en variante, elle pourrait tout aussi bien être du type de celle représentée sur la figure 12.

La présente invention ne se limite d'ailleurs pas aux formes de réalisation et de mise en oeuvre décrites et représentées, mais englobe toute variante d'exécution et/ou de combinaison de leurs divers éléments.

En particulier, au lieu que l'assujettissement de l'accessoire de goulotte suivant l'invention à la goulotte à équiper se fasse par pincement entre le corps et le couvercle de celle-ci, ou engagement sur un retour de ce couvercle, cet assujettissement pourrait tout aussi bien se faire tout autrement, et par exemple par collage.

Les moyens d'encliquetage du couvercle sur le corps peuvent conjointement être différents de ceux plus particulièrement décrits et représentés, et la lame de l'accessoire de goulotte suivant l'invention est alors simplement adaptée en conséquence.

Enfin, au lieu de former deux profilés distincts, le corps et le couvercle de la goulotte à équiper pourraient tout aussi bien appartenir à un même et seul profilé, en étant articulés l'un à l'autre le long d'une des génératrices de celui-ci.

## Revendications

1. Accessoire de goulotte, caractérisé en ce qu'il comporte, d'une part, une lame (26), pour son assujettissement à la goulotte (10) à équiper, et, d'autre part, un bourrelet (28), pour faire saillie sur celle-ci.

2. Accessoire de goulotte suivant la revendication 1, caractérisé en ce que, destiné à l'équipement d'une goulotte (10) dont le couvercle (12) présente en saillie au moins un cordon (18) pour son encliquetage dans une gorge (15) du corps (11) auquel il est associé, sa lame (26) forme un U (30), pour le contournement au moins partiel du cordon (18) du couvercle (12).

3. Accessoire de goulotte suivant la revendication 2, caractérisé en ce que l'aile libre (32), au moins, du U (30) que forme sa lame (26) est élastiquement déformable.

4. Accessoire de goulotte suivant la revendication 3, caractérisé en ce que, au repos, l'aile libre (32) du U (30) que forme sa lame (26) s'écarte en oblique de l'autre aile (33) de ce U (30).

5. Accessoire de goulotte suivant la revendication 3, caractérisé en ce que, au repos, l'aile libre (32) du U (30) que forme sa lame (26) se rapproche en oblique de l'autre aile (33) de ce U (30).

6. Accessoire de goulotte suivant l'une quelconque des revendications 2 à 5, caractérisé en ce que, destiné à l'équipement d'une goulotte (10) dont le cordon (18) du couvercle (12) comporte transversalement un cran (19) pour coopération avec un cran (16) prévu en correspondance sur le corps (11) auquel ce couvercle (12) est associé, sa lame (26) présente trois zones, à savoir, une première zone (Z1), par laquelle elle se raccorde au bourrelet dont elle est issue, une deuxième zone (Z2), qui, sensiblement perpendiculaire à la précédente, forme un décrochement pour l'ensemble, et une troisième zone (Z3), qui forme le U (30) terminal.

7. Accessoire de goulotte suivant la revendication 6, caractérisé en ce que la troisième zone (Z3) de sa lame (26) s'étend sensiblement perpendiculairement à la deuxième zone (Z2) à son raccordement à celle-ci.

8. Accessoire de goulotte suivant l'une quelconque des revendications 1 à 7, caractérisé en ce que sa section transversale est globalement en forme de virgule.

9. Accessoire de goulotte suivant la revendication 1, caractérisé en ce que, s'agissant de l'équipement d'une goulotte (10) dont le couvercle (12) présente en saillie un cordon (18') pour son engagement dans une gorge (15) du corps (11) et un contre-cordon (18") pour son encliquetage sur un talon (35) de celui-ci, sa lame (26) comporte, successivement, à compter de son bourrelet (28), une première zone (Z1), conformée en U, pour le contournement du cordon (18') du couvercle (12), une deuxième zone (Z2), également conformée en U, mais de sens inverse de la précédente, pour le contournement de l'aile libre (36) de la partie du corps (11) définissant la gorge (15), et une troisième zone (Z3), également conformée en U, suivant le même sens que la première zone (Z1), pour son engagement sur le talon (35) du corps (11).

10. Accessoire de goulotte suivant l'une quelconque des revendications 1 à 9, caractérisé en ce que, exception faite de son raccordement au bourrelet (28) où elle est épaissie, sa lame (26) est équi-épaisse.

11. Accessoire de goulotte suivant l'une quelconque des revendications 1 à 10, caractérisé en ce que son bourrelet (28) s'étend transversalement de part et d'autre de la lame (26) à son raccordement à celle-ci.

12. Accessoire de goulotte suivant l'une quelconque des revendications 1 à 10, caractérisé en ce que son bourrelet (28) ne s'étend transversalement que d'un seul côté de la lame (26) qui le porte.

13. Goulotte, du genre comportant, sous la forme générale d'au moins un profilé, un corps (11) et un couvercle (12, 12'), caractérisée en ce qu'elle est équipée, au moins localement, sur une partie au moins de sa longueur, d'au moins un accessoire de goulotte (25) conforme à l'une quelconque des revendications 1 à 12.

14. Goulotte suivant la revendication 13, caractérisée en ce que, son couvercle (12, 12') présentant en saillie au moins un cordon (18, 18') pour son encliquetage dans une gorge (15) du corps (11), l'accessoire de goulotte (25) dont elle est équipée est inséré par sa lame (26) dans l'interstice (22, 22') existant entre le corps (11) et le couvercle (12, 12') le long du cordon (18, 18') de celui-ci, et, en saillie sur l'ensemble, son bourrelet (28) recouvre au moins partiellement ledit interstice (22, 22').

## Claims

1. A channel accessory characterised in that it comprises on the one hand a strip (26) for fixing it to the channel (10) to be equipped therewith and on the other hand a bead (28) for projecting thereon.

2. A channel accessory according to claim 1 characterised in that, intended for fitting to a channel (10) whose cover (12) has in projecting relationship at least one bar portion (18) for latching engagement thereof into a groove (15) in the body (11) with which it is associated, its strip (26) forms a U (30) for at least partially fitting around the bar portion (18) of the cover (12).

3. A channel accessory according to claim 2 characterised in that the free limb (32) at least of the U (30) which is formed by its strip (26) is elastically deformable.

4. A channel accessory according to claim 3 characterised in that in the rest condition the free limb (32) of the U (30) which is formed by its strip (26) extends inclinedly away from the other limb (33) of said U (30).

5. A channel accessory according to claim 3 characterised in that in the rest condition the free limb (32) of the U (30) which is formed by its strip (26) extends inclinedly towards the other limb (33) of said U (30).

6. A channel accessory according to any one of claims 2 to 5 characterised in that, intended for fitting to a channel (10) of which the bar portion (18) of the cover (12) transversely comprises a tooth (19) for co-operating with a tooth (16) provided at a corresponding position on the body (11) with which said cover (12) is associated, its strip (26) has three zones, namely a first zone (Z1) by way of which it is connected to the bead from which it extends, a second zone (Z2) which, substantially perpendicular to the previous zone, forms an offset configuration for the whole, and a third zone (Z3) which forms the terminal U (30).

7. A channel accessory according to claim 6 characterised in that the third zone (Z3) of its strip (26) extends substantially perpendicular to the second zone (Z2) at its connection thereto.

8. A channel accessory according to any one of claims 1 to 7 characterised in that its cross-section is overall in the form of a comma.

9. A channel accessory according to claim 1 characterised in that, for fitting to a channel (10) whose cover (12) has in projecting relationship a bar portion (18') for engagement thereof into a groove (15) in the body (11) and a co-operating bar portion (11") for latching engagement thereof on to a rib portion (35) of the body, its strip (26) comprises in succession, from its bead (28), a first zone (Z1) of a U-shaped configuration for fitting around the bar portion (18') of the cover (12), a second zone (Z2) which is also of a U-shaped configuration but in the opposite direction to the previous configuration, for fitting around the free limb (36) of the part of the body (11) defining the groove (15), and a third zone (Z3) which is also of a U-shaped configuration in the same direction as the first zone (Z1) for engagement thereof on to the rib portion (35) of the body (11).

10. A channel accessory according to any one of claims 1 to 9 characterised in that, except for its connection to the bead (28) where it is thickened, its strip (26) is of uniform thickness.

11. A channel accessory according to any one of claims 1 to 10 characterised in that its bead (28) extends transversely on respective sides of its strip (26) at its connection thereto.

12. A channel accessory according to any one of claims 1 to 10 characterised in that its bead (28) extends transversely only on one side of the strip (26) which carries it.

13. A channel of the type comprising, in the general shape of at least one profiled member, a body (11) and a cover (12, 12'), characterised in that it is fitted at least locally over a part at least of its length with at least one channel accessory (25) according to any one of claims 1 to 12.

14. A channel according to claim 13 characterised in that, its cover (12, 12') having in projecting relationship at least one bar portion (18, 18') for latching engagement thereof into a groove (15) in the body (11), the channel accessory (25) with which it is fitted is inserted by means of its strip (26) into the gap (22, 22') between the body (11) and the cover (12, 12') along the bar portion (18, 18') thereof and, in projecting relationship on the whole, its bead (28) at least partially covers said gap (22, 22').

## Patentansprüche

1. Rinnenzubehörteil,
dadurch **gekennzeichnet**,
daß es einerseits zu seiner Befestigung an der auszurüstenden Rinne (10) eine Lamelle (26) und andererseits einen Wulst (28) umfaßt, der an der Rinne vorsteht.

2. Rinnenzubehörteil nach Anspruch 1,
dadurch **gekennzeichnet**,
daß es zur Ausrüstung einer Rinne (10) bestimmt ist, deren Deckel (12) wenigstens einen vorspringenden Rand (18) zum Einrasten in einer Nut (15) des Rumpfes (11) aufweist, dem er zugeordnet ist, und daß seine Lamelle eine U-Form (30) bildet, um den Rand (18) des Deckels (12) wenigstens teilweise zu umgreifen.

3. Rinnenzubehörteil nach Anspruch 2,
dadurch **gekennzeichnet**,
daß zumindest der freie Schenkel (32) der durch seine Lamelle (26) gebildeten U-Form (30) elastisch verformbar ist.

4. Rillenzubehörteil nach Anspruch 3,
dadurch **gekennzeichnet**,
daß im Ruhezustand der freie Schenkel (32) der durch seine Lamelle (26) gebildeten U-Form (30) schräg zum anderen Schenkel (33) dieser U-Form (30) verläuft und sich von diesem wegerstreckt.

5. Rillenzubehörteil nach Anspruch 3,
dadurch **gekennzeichnet**,
daß im Ruhezustand der freie Schenkel (32) der durch seine Lamelle (26) gebildeten U-Form (30) schräg zu dem anderen Schenkel (33) dieser U-Form (30) verläuft und sich diesem annähert.

6. Rillenzubehörteil nach einem der Ansprüche 2 bis 5,
dadurch **gekennzeichnet**,
daß es zur Ausrüstung einer Rinne (10) bestimmt ist, deren dem Deckel (12) zugeordneter Rand (18) eine querverlaufende Stufe (19) umfaßt, die mit einer Stufe (16) zusammenwirkt, die entsprechend am Rumpf (14) vorgesehen ist, dem der Deckel (12) zugeordnet ist, und daß seine Lamelle (36) drei Zonen aufweist, nämlich eine erste Zone (Z1), über die sie mit dem Wulst verbunden ist, von dem sie ausgeht, eine zweite Zone (Z2), die im wesentlichen senkrecht zur vorhergehenden verläuft und einen Absatz in der Einheit bildet, und eine dritte Zone (Z3), die die endgültige U-Form (30) bildet.

7. Rinnenzubehörteil nach Anspruch 6,
dadurch **gekennzeichnet**,
daß die dritte Zone (Z3) ihrer Lamelle (26) sich zur zweiten Zone (Z2) bei ihrem Anschluß an diese im wesentlichen senkrecht erstreckt.

8. Rinnenzubehörteil nach einem der Ansprüche 1 bis 7,
dadurch **gekennzeichnet**,
daß es im Querschnitt allgemein die Form eines Kommas besitzt.

9. Rinnenzubehörteil nach Anspruch 1,
dadurch **gekennzeichnet**,
daß es sich um die Ausrüstung einer Rinne (10) handelt, deren Deckel (12) einen vorspringenden Rand (18') für einen Eingriff in eine Nut (15) des Rumpfes (11) und einen Gegenrand (18") für ein Einrasten an einem Ansatz (35) des Rumpfes (15) aufweist, und daß seine Lamelle (26) nacheinander ausgehend von seinem Wulst (28) eine U-förmige erste Zone (Z1) für ein Umgreifen des Randes (18') des Deckels (12), eine ebenfalls U-förmige, bezüglich der vorhergehenden jedoch entgegengesetzt gerichtete zweite Zone (Z2) für ein Umgreifen des freien Schenkels (36) des die Nut (15) definierenden Teils des Rumpfes (11) und eine dritte Zone (Z3) umfaßt, die ebenfalls U-förmig ausgebildet ist und sich in der gleichen Richtung wie die erste Zone (Z1) erstreckt, um mit dem Ansatz (35) des Rumpfes (11) in Eingriff zu treten.

10. Rinnenzubehörteil nach einem der Ansprüche 1 bis 9,
dadurch **gekennzeichnet**,
daß seine Lamelle (36) mit Ausnahme ihres Anschlusses an den Wulst (28), wo sie dicker ausgebildet ist, eine gleiche Dicke besitzt.

11. Rinnenzubehörteil nach einem der Ansprüche 1 bis 10,
dadurch **gekennzeichnet**,
daß sich sein Wulst (28) in Querrichtung bei seinem Anschluß an die Lamelle (26) beiderseits dieser Lamelle (26) erstreckt.

12. Rinnenzubehörteil nach einem der Ansprüche 1 bis 10,
dadurch **gekennzeichnet**,
daß sich sein Wulst (28) nur auf einer Seite der diesen tragenden Lamelle (26) in Querrichtung erstreckt.

13. Rinne, die in der allgemeinen Gestalt wenigstens eines Profils einen Rumpf (11) und einen Deckel (12, 12') umfaßt,
dadurch **gekennzeichnet**,
daß sie zumindest lokal über wenigstens einen Teil ihrer Länge mit zumindest einem Rinnenzubehörteil (25) gemäß einem der Ansprüche 1 bis 12 ausgerüstet ist.

14. Rinne nach Anspruch 13,
dadurch **gekennzeichnet**,
daß ihr Deckel (12, 12') wenigstens einen vorspringenden Rand (18, 18') für ein Einrasten in einer Nut (15) des Rumpfes (11) aufweist, daß das Rinnenzubehörteil (25), mit dem sie ausgerüstet ist, mit seiner Lamelle (26) in den Zwischenraum (22, 22') eingesetzt ist, der zwischen dem Rumpf (11) und dem Deckel (12, 12') entlang dessen Rand (18, 18') vorgesehen ist, und daß ihr von der Einheit vorspringender Wulst (28) den Zwischenraum (22, 22') zumindest teilweise bedeckt.
